(19) Europäisches Patentamt
European Patent Office
Office européen des brevets

(11) **EP 3 199 506 B1**

(12) **EUROPEAN PATENT SPECIFICATION**

(45) Date of publication and mention
of the grant of the patent:
**20.03.2019 Bulletin 2019/12**

(51) Int Cl.:
***C04B 41/89*** [(2006.01)]

(21) Application number: **16000201.0**

(22) Date of filing: **28.01.2016**

(54) **PROCEDURE FOR CONTROLLING THE CHEMICAL REACTION IN MULTI-LAYER CERAMIC DECORATIONS**

VERFAHREN ZUR STEUERUNG DER CHEMISCHEN REAKTION IN MEHRSCHICHTIGEN KERAMISCHEN DEKORATIONEN

PROCÉDURE DE CONTRÔLE DE LA RÉACTION CHIMIQUE DE DÉCORS CÉRAMIQUES MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2017 Bulletin 2017/31**

(73) Proprietor: **Sociedad Anónima Minera Catalano-Aragonesa**
**50001 Zaragoza (ES)**

(72) Inventors:
• **Caballero López, Miguel Ángel**
**50001 Zaragoza (ES)**
• **Pérez Aparicio, Joaquín Javier**
**50001 Zaragoza (ES)**
• **Navarro Pérez, Sandra**
**50001 Zaragoza (ES)**
• **Reverter Ibañez, Silvia**
**50001 Zaragoza (ES)**

(74) Representative: **Schäfer, Matthias W.**
**Patentanwalt**
**Schwanseestrasse 43**
**81549 München (DE)**

(56) References cited:
**EP-A1- 1 921 055    EP-A2- 2 562 144**

**Description**

**Technical area.**

The present invention comes within the field of materials for the ceramics industry, in particular, glazes and inks intended for application in the industrial ceramics industry, both for ceramic tiles and structural and sanitary ceramics, for the purpose of obtaining visual effects or special textures: metallic gloss, matt texture, surfaces protected by devitrification of crystalline species, etc.

**Definitions.**

The particle size distribution (hereafter expressed as PSD), of a powder, a granular product or particles dispersed in a liquid, is a series of values that defines the relative amount, typically by mass or volume, of the particles present, ordered according to their size.

d(v,n), generally expressed as Dn, is a collection of parameters that allows a PSD to be characterised and it is defined as the equivalent diameter of a particle such that an amount n (expressed on a per unit basis) of the volume of the control sample has an equivalent diameter that is less than the said value. For example: d(v,0.50), also expressed as D50 would correspond to the median of the PSD.

d(v. 0.90), also expressed as D90, is the parameter that is normally used as the upper bound of the PSD of glaze suspensions.

Metallic appearance (gloss). It is a quality or effect of materials, characterised by the fact that both the gloss and colour of the materials vary according to the angle of view, so that the human eye associates them with a metallic product (without them necessarily having an atomic structure based on metal bonds). That is, it is an optical appearance that is not always related to the chemical or structural composition of the product. A typical example of materials with a metallic appearance, without them really being so, is car paints and coatings of numerous household objects normally made of plastic.

Given that it is a visual appearance effect it is not easy to express it in numerical terms. Even so, since the metallic appearance is related to changes in colour and gloss depending on the angle of view, it is possible to establish a measurement of said metallic appearance based on optical measurements according to the angle. Various proposals for estimating metallic appearance can be found in the literature. For example, equation 1 is commonly used in the car industry.

$$FI = 2.69 \frac{\left(L^{*}_{15°} - L^{*}_{110°}\right)^{1.11}}{L^{*\,0.86}_{45°}} \quad (1)$$

Where $L^{*}_{15}°$, $L^{*}_{45}°$ and $L^{*}_{110}°$ are the luminosity values determined with a multi-angle spectrophotometer colorimeter.

Metallic effects in ceramics have been known for hundreds of years and different techniques have been used to obtain them, ranging from thermal reduction treatments, the suspension of particles of noble metal in ceramic glazes, lead silicate glazes with high concentrations of transition metal oxides in their composition, and inks containing crystalline flat pigments (similar to those employed in car paints). Except in the last case, in which the metallic effect is based on the application of coats containing reflective laminar pigments, in general in ceramics the metallic effects are due to the presence of high-reflectivity devitrified microcrystals inside the glaze during the corresponding thermal treatment, which generate gloss variations depending on the angle, with high-intensity peaks at intermediate angles (60°). Furthermore, it must be added in this case that the metallic gloss decoration is applied over a glaze that can be matt or gloss, affecting the gloss measurements of the ink coating. For this reason, a metallic appearance index $\theta_M$ has been estimated in this case, based on gloss measurements determined with a standard multi-angle glossmeter, according to equation 2:

$$\theta_M = \theta_{60°} - \theta_{85°} \quad (2)$$

Where $\theta_{60°}$ and $\theta_{85°}$ are the gloss values of coatings measured with a multi-angle glossmeter in Gloss Units (GU).

Determination of this metallic index $\theta_M$ has been combined with measurement of colour in CIELAB coordinates: L* (luminosity), a* (red-green component), b* (blue-yellow component), with saturation or chromaticity C* also being calculated according to:

$$C^* = \sqrt{a^{*2} + b^{*2}} \quad (3)$$

<u>Penetration by capillary suction.</u> This is a physical process by which a porous solid that acts as a substrate absorbs a liquid through the channels of its network of pores. A specific case, such as that examined in the present invention, occurs when the liquid absorbed is a suspension, with a high concentration of particles with a specific PSD.

<u>Chemical diffusion.</u> Unlike the process of penetration by suction, chemical diffusion is a process whereby material is transported by atomic movement. In the case of ceramic glazes, as they are vitreous products chemical diffusion phenomena occur when they undergo thermal treatment or firing and reach their liquid state. Unlike diffusion in gases, which involves rapid movement of atoms and molecules, liquid diffusion is a slow process characterised by a great number of atomic interactions.

**Prior art**

The technique of digital tile printing using machines with ink-jet heads is an economical system with a high degree of process flexibility. For this reason it has become a widely used procedure for decorating ceramic tiles, both for applying pigmented inks to obtain designs and for applying special inks to obtain effects: matt, reactive, gloss, etc.

There are descriptions of several related procedures, such as, for example in Patent ES 2 131 466 *"Automatic procedure for decorating ceramic substrates",* which describes, in general terms, the use of the inkjet system in ceramics.

Generally all of the inkjet inks used in the decoration of ceramic products are applied over glazes, so that these are multi-layer ceramic decorations. Initially inks for ceramic purposes were developed from the soluble salts of different metals, such as in ES 2 152 100 T3" *Ruthenium chloride in aqueous solution to dye ceramic surfaces black"* or in ES 2 238 332 T3 "Individual inks and an ink set for use in colour inkjet printing of glazed ceramic articles and surfaces". However, since ceramic pieces are subsequently subjected to thermal treatments in which fusion of the glaze takes place, the problem of some layers reacting with others arose very soon due to the fact that the uncontrolled penetration of the ink (a soluble salt) throughout the profile of the layer of glaze led to lack of stability in the results of decoration.

For this reason very early on soluble salt inks were replaced by pigmented inks, such as in ES 2 289 916 *"Colloidal dispersion of ceramic pigments",* in which the aim is to prevent any type of chemical reaction with the bottom layer of glaze. Pigments that afford maximum stability for glazing are used for this purpose since the partial or total dissolution of the pigment leads to serious loss of colouring. In fact, procedures have even been established, normally involving the application of intermediate isolating layers such as in ES 2 439 941 T3 *"Method for ink injection printing on an inorganic base material',* in which the aim is to precisely prevent a chemical reaction between the glaze layer and that of the ink. These procedures and inks only achieve finishes in different colours by injection, but no special effects can be obtained.

In the prior art there are ink applications which claim special effects, gloss, matt, penetrating or metallic, such as US 2013/0265376, but there is no mention of any type of interaction between the inks and the substrate to which they are applied, so that it is understood that there is no reaction between layers, or that this is not purposely intended.

There is a case that specifically deals with the reaction of an ink and a glaze to obtain metallic effects in ceramic products, ES 2 396 399 " *Procedure for obtaining a metallic effect on ceramic bases by ink injection",* in which the known ceramic glaze formulation to obtain metallised finishes is broken down into two separate compounds: on the one hand, a glaze with part of the oxides needed to obtain the metallic effect, which is applied in the conventional manner over the ceramic base, and on the other hand, a metallic ink with the other necessary part of the oxides, which is applied by ink injection over the previous layer, finishing off with a firing process. As a result, a ceramic tile with metallic effect decoration is obtained.

In this case, unlike that of pigmented inks in which the stability of the pigment inside the glaze minimizes dissolution of the pigment, the intention is for a chemical reaction to take place between the ink components and the glaze components. However, in procedure ES 2 396 399 no mention is made of how to control the chemical reaction generated, so that the result will depend on a host of factors such as method of application, subsequent firing of the ceramic object and indeed, the waiting times between one phase and another. This could give rise to a product with a variable appearance that is not apt for most ceramic uses in which good reproducibility and compliance with strict quality parameters is required.

As far as we know, there is no technical solution to this problem in the prior art. Indeed, none of the patents located mention any type of physical treatment of the substrate glaze that is intended to control the penetration of the inks used or the chemical reaction between both layers. Thus, this issue represents a real challenge to be overcome.

The present invention manages to overcome the aforementioned problems by not leaving the interaction between the two layers to chance, by controlling the relevant parameters to achieve the precise adjustment of the chemical composition throughout the whole profile of the glaze substrate layer. Given that a chemical reaction between two overlying layers is intended, the innovation presented herein resolves the mechanism by which one layer penetrates the other, and the variables on which to act to obtain adequate proportions of the chemical elements involved, for the purpose of optimizing the desired ceramic effect.

## Description of the invention

The above mentioned problem has been solved by a procedure for controlling the chemical reaction in multi-layer ceramic decorations having the features of claim 1. Advantageous embodiments are described in the dependent claims. The present description relates, as its title indicates, to a procedure for controlling the chemical reaction in multi-layer ceramic decorations, when, to decorate a ceramic product, two consecutive layers of glaze are used, in which the formulation of the glaze is broken down into two separate compounds: on the one hand, a glaze with part of the oxides required to obtain the desired effect, applied by traditional methods (waterfall, airbrush, silk screen, rotogravure, etc) to the ceramic base, and on the other hand, an ink with the other necessary part of the oxides, which is applied by ink injection over the previous layer, finishing off with a firing process that causes the fusion of the glaze, the chemical diffusion of the oxides provided by the glaze and the ink, and the subsequent chemical reaction responsible for the desired ceramic effect. According to the present invention, the control of the chemical reaction is based on regulating the glaze PSD, characterised by having values of 18.9 $\mu$m $\leq$ D90 < 30 $\mu$m, in order to reduce pore size and, proportionally, the speed and depth of ink penetration by capillary suction (hereafter, penetration). As a result a decorated ceramic tile is obtained.

In this way the problem that exists in terms of controlling the decoration of ceramic objects using overlying layers of glaze is solved, improving the current state of the art by overcoming the technical problem of controlling the chemical reaction.

## Advantages of the invention

This procedure affords a fundamental advantage over all that is described in the state of the art since it controls ink penetration into the glaze and, consequently, the chemical composition throughout the whole profile of the successive vitreous layers corresponding to the decoration of ceramic objects. This enables the adjustment of the proportion of oxides that favours the optimum chemical reaction in order to produce the desired ceramic effect.

Another great advantage of this procedure is that it permits notable savings of the materials used in production. It is important to bear in mind that in current techniques an excess of ink has to be added due to the uncontrolled penetration of the ink in the substrate and its consequent loss of effectiveness following thermal treatment due to the diffusion of the oxides in the glaze (in liquid state) which reduces the concentration of the oxides to below the reaction threshold. The necessary addition of excess ink may not always be viable in current techniques since the inkjet printing heads available in the market are limited in terms of maximum applicable weight, which may vary between 15 and 100 g/m$^2$ (for a printing speed of 25 m/min). In its approach to this problem, the proposed invention enables the weight of the ink to be reduced by between 50 and 75% compared to that required when application is carried out by commonly used techniques.

## Description of the figures.

To gain a better understanding of the object of the present invention, the following explanatory figures are included.

Figure -1- shows a block diagram of the application procedure.
Figure -2- shows a graph of the evolution of metallic gloss according to the weight of ink applied and the PSD of the glazes
Figure -3- shows a graph of the evolution of colouring according to the weight of ink applied and the PSD of the glazes
Figure -4- shows a cross section of glazes with different glaze PSD under SEM (scanning electron microscope) at 15,000 times magnification.

## Preferred embodiment of the invention

The procedure for controlling the chemical reaction when two overlying layers are used to decorate a ceramic product, that is the object of the present invention, basically comprises, as can be seen in figure -1- of the attached drawing, the separate use of a glaze (2) with part of the necessary oxides to obtain the desired ceramic effect and an ink (4) for decorating by injection, with the other necessary part of the oxides. Both layers must react chemically with each other, in a controlled way, by regulating the penetration of ink by capillary suction, by acting on the number and size of the glaze pores, and thus achieving the desired ceramic effect. This ceramic effect consists of obtaining visual effects or special textures: metallic gloss, matt texture, surfaces protected by devitrification of crystalline species, etc.

This separate use is carried out by means of a first phase of application (3) of the glaze (2) on a ceramic base (1), followed by a second phase of decorating by injection (5) of a special ink (4) over the layer previously deposited on the ceramic base (1), completed by a third phase of firing (6).

The phase of application (3) of the glaze (2) on a ceramic base (1) is carried out by means of a process chosen from amongst the group formed by: bell, airbrush, rotary, disc or waterfall.

The phase of injection (5) of the ink (4) is preferably carried out using a standard inkjet head such as those commonly used for decorating ceramic products. This process involves the penetration of the ink (4) in the glaze (2).

The firing phase (6) is carried out by means of a normal ceramic cycle, from traditional double firing at 900ºC to high-temperature porcelain stoneware firing at 1300ºC. This firing involves the diffusion of the ink oxides inside the melted glaze which permits the chemical reaction between both, giving rise to the desired ceramic effect.

The ink (4) is formulated by selecting only some of the oxides needed to obtain the ceramic effect, since the technique of inkjet printing only allows a very light weight to be applied. Depending on the type of ink (4) chosen, glaze formulations are used that provide the rest of the oxides that are necessary for the chemical reaction, as well as those that form the vitreous substrate.

In its formulation the glaze allows the penetration of ink by capillary suction to be regulated by means of two mechanisms:

a) By regulating the PSD of the glaze in order to modify the mean pore size and, in this way, adjust the speed and depth of ink penetration. By reducing the PSD of the glaze, the mean pore size decreases and the speed and depth of ink penetration is reduced proportionally. Thus, in glazes with a PSD characterised by having D90 < 30 $\mu$m, reductions of between 50 and 75% in the required weight of ink to be applied per surface unit can be obtained, due to lower ink penetration.

b) Preferably, the formulation includes different types of organic additives, the so-called film-forming additives, to slow down or block ink penetration by reducing the number of open pores, which decreases the speed of absorption by the glaze. The film-forming additives to be used can be selected from among different types of polymers: polyoxyethylene derivatives, vinylic polymers such as polyvinylpyrrolidone (PVP), acrylic polymers, cellulose polymers such as ethyl cellulose (EC), hydroxypropyl cellulose (HPC), hydroxypropyl methylcellulose (HPMC), hydroxy methyl ethyl cellulose (HMEC) or cellulose acetophthalate (CA), polyoxyl derivatives, phthalate esters, triethyl citrate and triethylamine, diethyl citrate and propylene glycol.

Thus, thanks to these two mechanisms for controlling the penetration of ink by capillary suction, the addition of reagents is optimized, reducing the weight of ink that has to be applied.

In a specific embodiment of the invention, the ink (4) is mainly formed by iron oxides or salts, with a concentration by weight of between 30 and 60% of the total weight of the ink. In this embodiment the glaze employed as the substrate has a PSD characterised by a value of D90 < 30 $\mu$m. As a result of this specific embodiment a ceramic tile is obtained with a metallic effect decoration that can be measured by colorimetric and gloss measurement techniques.

In another specific embodiment of the invention, the ink (4) is mainly formed by modified iron phosphates, with a concentration by weight of between 30 and 60% of the total weight of the ink. In this embodiment the glaze employed as the substrate has a PSD characterised by having a value of 20 $\mu$m < D90 < 30 $\mu$m. Resulting from this specific embodiment a ceramic tile is obtained with a metallic effect decoration that can be measured by colorimetric and gloss measurement techniques.

A technical expert will easily comprehend that the characteristics of different embodiments can be combined with the characteristics of other possible embodiments, provided that the combination is technically possible.

## EXAMPLES

**Example 1. Effect of glaze PSD on the penetration of ink and on the profile of the compositions of the glaze layer. Its influence on obtaining metallic effects.**

Maintaining the standard formulation of the substrate glaze and just modifying milling conditions, several samples with a decreasing PSD have been prepared in order to study the influence that this variable has on the permeability or penetrability of the ink in the glaze and consequently on the surface characteristics related to the aesthetic appearance to be evaluated.

The results reveal an evolution in metallic gloss $\theta_M$ for each glaze PSD as the weight of the ink applied is increased (deriving from the design resolution used). As can be seen in Table 1 and its corresponding figure -2-, for this case an optimal point, where the metallic gloss is maximized, is located in the zone close to D90 = 28.9 $\mu$m and Ink weight = 21.6 g/m$^2$.

**Table 1. Metallic gloss values, in GU, in terms of glaze PSD and ink weight applied**

| $\theta_M$ | | Resolution [dpi] (Weight [g/m²]) | | | |
| --- | --- | --- | --- | --- | --- |
| | | **400** (8.33) | **600** (16.6) | **800** (21.6) | **1200** (35) |
| Glaze D90 (μm) | **A** (38.6) | 3.6 | 12.3 | 36.1 | 50.6 |
| | **B** (32.6) | 3.6 | 11.1 | 42.4 | 59.4 |
| | **C** (28.9) | 4.7 | 29.3 | 68.5 | 41.8 |
| | **D** (18.9) | 21.2 | 51.3 | 20.7 | -1.6 |
| | **E** (13.3) | 30.0 | 8.6 | -1.8 | -7.1 |

Furthermore, in view of the colour variations that exist depending on glaze PSD and the layer of ink applied, the chromatic coordinates of the different applications have been determined, resulting in the data indicated in Table 2.

## Table 2. Chromatic coordinates of decorated glazes depending on glaze PSD and ink resolution applied.

| CIELAB Coordinates | | | Resolution [dpi] | | | |
|---|---|---|---|---|---|---|
| | | | 400 | 600 | 800 | 1200 |
| Glaze (D90 [μm]) | A (38.6) | L* | 54.3 | 48.0 | 52.2 | 63.4 |
| | | a* | 12.9 | 5.0 | -0.7 | -1.2 |
| | | b* | 22.6 | 2.9 | -1.5 | 1.8 |
| | | C* | 26.0 | 5.7 | 1.6 | 2.1 |
| | B (32.6) | L* | 53.2 | 45.8 | 52.4 | 65.7 |
| | | a* | 14.1 | 5.7 | -0.6 | -1.1 |
| | | b* | 23.5 | 3.1 | -0.8 | 4.2 |
| | | C* | 27.4 | 6.5 | 1.0 | 4.3 |
| | C (28.9) | L* | 49.9 | 52.3 | 63.9 | 65.4 |
| | | a* | 13.5 | 1.1 | -2.5 | -1.5 |
| | | b* | 19.0 | -1.0 | -0.5 | 3.4 |
| | | C* | 23.3 | 1.5 | 2.6 | 3.7 |
| | D (18.9) | L* | 54.0 | 59.5 | 52.5 | 46.2 |
| | | a* | 9.0 | -0.7 | -0.7 | -0.3 |
| | | b* | 8.1 | -0.6 | -1.0 | -1.4 |
| | | C* | 12.1 | 1.0 | 1.2 | 1.5 |
| | E (13.3) | L* | 55.0 | 46.8 | 45.1 | 43.6 |
| | | a* | 4.7 | 1.9 | -0.3 | -0.1 |
| | | b* | 4.1 | -0.4 | -1.8 | -1.8 |
| | | C* | 6.3 | 1.9 | 1.8 | 1.8 |

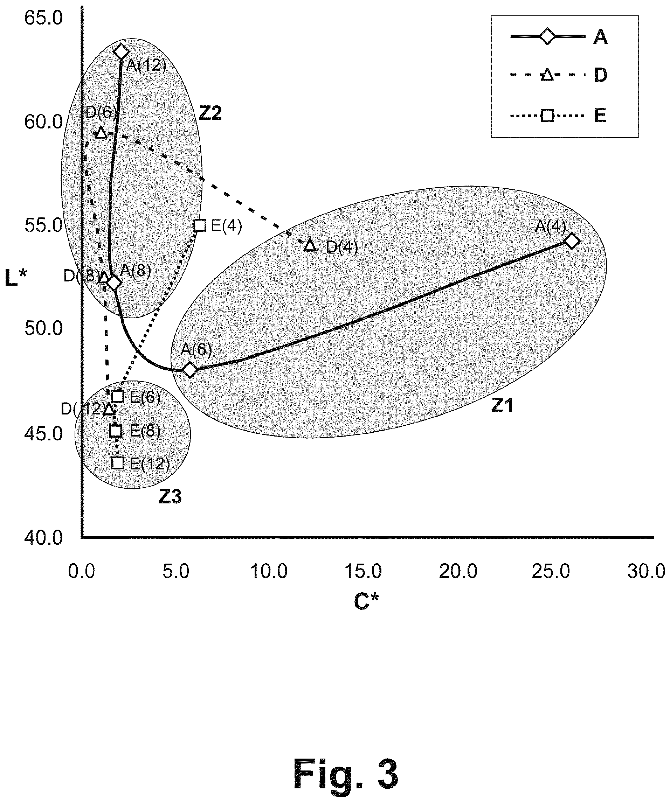

Figure 3 shows the L*values, compared to the C* values of the previous table, for the A, D and E test series (for the sake of simplicity tests series B and C are not shown since their results are very similar to test A). The notation employed for the points shown is S(r/100), where S is the series (glaze used) and r/100 is the resolution employed in ink application divided by 100. Thus, for example, A(4) is the point corresponding to glaze A, with a PSD of D90=38.6 μm, with an ink decoration applied at a resolution of 400 dpi.

As can be seen in Figure 3 the test series for glaze A (D90=38.6 $\mu$m), with a <u>COARSER</u> PSD, begins with point A(4) whose C* value is quite high, it does not have a metallic appearance and is located in a non-metallic colour zone that we have called Z1. As the resolution for ink application is increased, points A(6), A(8) and A(12), chromaticity C* decreases and luminosity L* increases, entering a metallic gloss zone that we have called Z2.

For a <u>MEDIUM</u> PSD distribution, such as that of D (D90=18.9 $\mu$m), the series begins at point D(4), with a non-metallic colour, reaching the Z2 metallic zone, points D(6) and D(8), more quickly than in the previous case and subsequently reaching a point, D(12), where the values of L* and C* are minimal, affording a blackish appearance due to ink saturation. We have called this saturation zone the Z3 zone.

Lastly, test series E, with a <u>FINE</u> PSD (D90=13.3$\mu$m) begins at point E(4) on the boundary of the metallic zone where we have metallic gloss but excessive colouring. As ink resolution is increased, the series evolves very rapidly towards points E(6), E(8) and E(12) that are already in the Z3 saturation zone. That is, when the PSD is too fine there is not an optimal point for the development of a metallic effect.

Figure 3 also shows that with a greater PSD in glazes with a low ink weight, a reddish non-metallic tone with a low gloss index is obtained, but as more ink is added, aesthetic properties improve, reaching the metallic gloss effect zone. However, with finer distributions the metallic effect zone is reached with a smaller proportion of ink than is the case with coarser distributions although, consequently, the passage from a reddish appearance to a saturated (graphite-type) appearance occurs sooner with this type of distribution. For this reason, for this example, medium sizes are considered to be optimal because the aesthetic appearance of fine glaze distributions is more sensitive to an increase in ink weight and with just small variations there is a more marked change.

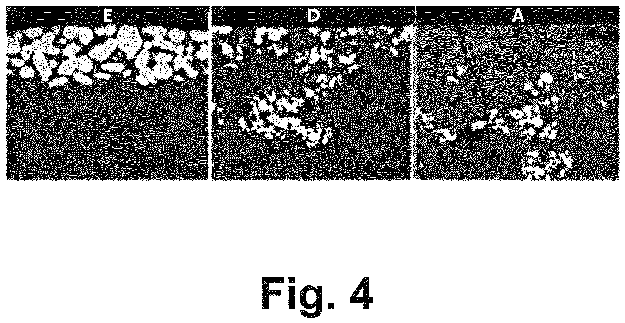

This phenomenon depends on the particle size of the ink, the number and distribution of sizes of glaze pores (deriving from the glaze PSD and the physical properties of the liquid medium (surface tension and viscosity). The influence of the glaze PSD lies in the fact that as it gets finer, the glaze mean size / ink mean size ratio is reduced, reducing ink penetration. To verify this, scanning electron microscopy tests have been performed (Figure 4) of the profile of test specimens corresponding to the series: A (COARSE glaze PSD), D (MEDIUM) and E (FINE), all of which are decorated with ink at an intermediate resolution of 600 dpi.

As can be observed in the image on the left of Figure 4, when the PSD is FINE, the ink cannot penetrate the glaze layer sufficiently during thermal treatment for an adequate chemical diffusion of the atoms contributed by the ink to take place inside the glass and a balanced distribution of the oxides that form part of the reaction is not achieved, so that said reaction does not occur and the effect is not obtained. This would correspond to point E(6) of Figure 3.

In the centre of Figure 4 the case of a MEDIUM PSD can be seen. The ink penetrates the glaze layer, the oxides are suitably diffused inside the glass and the chemical reaction occurs and there is surface recrystallization which gives rise to the observed metallic effect, corresponding to point D(6) of Figure 3.

Finally, on the right of figure -4- we have the case of COARSE PSD. There is an excessive penetration of the ink in the glaze so that when the corresponding thermal treatment is carried out, the chemical diffusion generated causes an excessive dispersion of the oxides so that the concentration required for the chemical reaction to take place is not reached, resulting in a coloured surface but without a metallic gloss, corresponding to point A(6) of Figure 3.

All of the information referring to examples or embodiments, including the tables, form part of the description of the invention. A technical expert will easily comprehend that the characteristics of different embodiments can be combined with the characteristics of other possible embodiments provided that the combination is technically possible, such as, for example, combining the optimal point obtained in example 1, which maximizes metallic gloss, in the zone close to D90 = 28.9 $\mu$m and ink weight = 21.6 g/m$^2$, by adding to the glaze a cellulose derivative such as ethyl cellulose (EC) in the non-limitative proportion of 0.5 % by weight of the total of the glaze formula (excluding load water), which would give rise to a glaze surface of a more plastic nature, reducing ink penetration even further.

**Claims**

1. Procedure for controlling the chemical reaction in multi-layer ceramic decorations of the type used to obtain a decorated ceramic product (7), using, separately, a glaze (2) with part of the necessary oxides and an ink (4) for decoration by injection with the other necessary part of the oxides, **characterised in that** the control of the chemical reaction between both layers is carried out by regulating the glaze particle size distribution (PSD), which is **characterised by** values of 18.9 $\mu$m 5 D90 < 30 $\mu$m, in order to reduce pore size and, proportionally, the speed and depth of penetration of the ink by capillary suction.

2. Procedure for controlling the chemical reaction in multi-layer ceramic decorations, according to the preceding claim, **wherein,** furthermore, the regulation of ink penetration is carried out by including in the formulation, different types of organic additives of the so-called film-forming additives, which reduce the number of pores present in the glaze, thus slowing down or blocking ink penetration.

3. Procedure for controlling the chemical reaction in multi-layer ceramic decorations, according to claim 2, **wherein** the film-forming additives to be used are selected from among different types of polymers: polyoxyethylene derivatives, vinylic polymers such as polyvinylpyrrolidone (PVP), acrylic polymers, cellulose polymers such as ethyl cellulose (EC), hydroxypropyl cellulose (HPC), hydroxypropyl methylcellulose (HPMC), hydroxy methyl ethyl cellulose (HMEC) or cellulose acetophthalate (CA), polyoxyl derivatives, phthalate esters, triethyl citrate and triethylamine, diethyl citrate and propylene glycol.

4. Procedure for controlling the chemical reaction in multi-layer ceramic decorations, according to the preceding claims, **wherein** the ink (4) is formed mainly by iron oxides or salts, with a concentration by weight of between 30 and 60% of the total weight of the ink.

5. Procedure for controlling the chemical reaction in multi-layer ceramic decorations, according to the preceding claims 1 to 3, wherein the ink (4) is formed **mainly** by modified iron phosphates, with a concentration by weight of between 30 and 60% of the total weight of the ink.

**Patentansprüche**

1. Verfahren zum Steuern der chemischen Reaktion bei mehrschichtigen Keramikverzierungen, wie sie zum Erzielen eines verzierten Keramikprodukts (7) verwendet wird, unter gesonderter Verwendung einer Glasur (2) mit einem Teil der notwendigen Oxide und einer Tinte (4) zur Verzierung durch Auftragen mit dem anderen notwendigen Teil der Oxide, **dadurch gekennzeichnet, dass** die Steuerung der chemischen Reaktion zwischen beiden Schichten durch Regulieren der Verteilung der Partikelgröße (PSD) der Glasur durchgeführt wird, was durch Werte von $18{,}9\ \mu m \leq D90 < 30\ \mu m$ gekennzeichnet ist, um Porengröße und proportional die Eindringgeschwindigkeit und -tiefe der Tinte durch kapillaren Sog zu verringern.

2. Verfahren zum Steuern der chemischen Reaktion bei mehrschichtigen Keramikverzierungen nach dem vorhergehenden Anspruch, wobei des Weiteren die Regulierung von Tinteneindringung durchgeführt wird, indem in der Rezeptur verschiedene Arten von organischen Zusätzen der so genannten Film bildenden Zusätze aufgenommen werden, welche die Anzahl der in der Glasur vorhanden Poren verringert und somit das Eindringen der Tinte verlangsamt oder blockiert.

3. Verfahren zum Steuern der chemischen Reaktion bei mehrschichtigen Keramikverzierungen nach Anspruch 2, wobei die zu verwendenden Film bildenden Zusätze aus verschiedenen Arten von Polymeren ausgewählt werden: Polyoxyethylen-Derivate, Vinylpolymere, wie beispielsweise Polyvinylpyrrolidon (PVP), Acrylpolymere, Zellulosepolymere, wie beispielsweise Ethylzellulose (EG), Hydroxypropylzellulose (HPC), Methylhydroxypropylzellulose (MHPC), Hydroxyethylmethylzellulose (HMEC) oder Zelluloseacetophthalate (CA), Polyoxyl-Derivate, Phthalatester, Triethylcitrat und Triethylamin, Diethylcitrat und Propylenglykol.

4. Verfahren zum Steuern der chemischen Reaktion bei mehrschichtigen Keramikverzierungen nach den vorhergehenden Ansprüchen, wobei die Tinte (4) hauptsächlich von Oxiden oder Salzen von Eisen mit einer Gewichtskonzentration von zwischen 30 und 60% des Gesamtgewichts der Tinte gebildet wird.

5. Verfahren zum Steuern der chemischen Reaktion bei mehrschichtigen Keramikverzierungen nach den vorhergehenden Ansprüchen 1 bis 3, wobei die Tinte (4) hauptsächlich aus modifizierten Eisenphosphaten mit einer Gewichtskonzentration von zwischen 30 und 60% des Gesamtgewichts der Tinte gebildet wird.

**Revendications**

1. Procédé de contrôle de la réaction chimique dans des décorations céramiques multicouches du type utilisé pour obtenir un produit céramique décoré (7), utilisant séparément, une glaçure (2) comprenant une partie des oxydes nécessaires et une encre (4) pour décoration par injection avec l'autre partie nécessaire des oxydes, **caractérisé en ce que** le contrôle de la réaction chimique entre les deux couches est effectué en régulant la distribution granulométrique (PSD) de la glaçure à des valeurs de $18{.}9 \mu m \leq D90 < 30 \mu m$, afin de réduire la taille des pores et, proportionnellement, la vitesse et la profondeur de pénétration de l'encre par aspiration capillaire.

2. Procédé de contrôle de la réaction chimique dans des décorations céramiques multicouches selon la revendication précédente dans lequel, en outre, la régulation de la pénétration de l'encre est effectuée en incluant différents types d'additifs organiques dits additifs filmogènes, ceci réduisant le nombre de pores présents dans la glaçure, ce qui ralentit ou empêche la pénétration de l'encre.

3. Procédé de contrôle de la réaction chimique dans des décorations céramiques multicouches selon la revendication 2, dans lequel les additifs filmogènes à utiliser sont choisis parmi différents types de polymères : Dérivés de polyoxyéthylènes, polymères vinyliques tels que la polyvinylpyrrolidone (PVP), polymères acryliques, polymères cellulosiques tels que l'éthylcellulose (EC), la cellulose hydroxypropylique (HPC), la méthylcellulose hydroxypropylique (HPMC), l'hydroxyméthyléthylcellulose (HMEC) ou l'acétophtalate de cellulose (CA), dérivés polyoxyles, esters de phtalate, citrate triéthylique et triéthylamine, citrate de diéthylène et propylène glycol.

4. Procédé de contrôle de la réaction chimique dans des décorations céramiques multicouches selon les revendications précédentes, dans lequel l'encre (4) est formée principalement par des oxydes de fer ou des sels ayant une concentration en poids comprise entre 30 et 60% du poids total de l'encre.

5. Procédé de contrôle de la réaction chimique dans des décorations céramiques multicouches selon les revendications précédentes 1 à 3, dans lequel l'encre (4) est formée principalement par des phosphates de fer modifiés ayant une concentration en poids comprise entre 30 et 60% du poids total de l'encre.

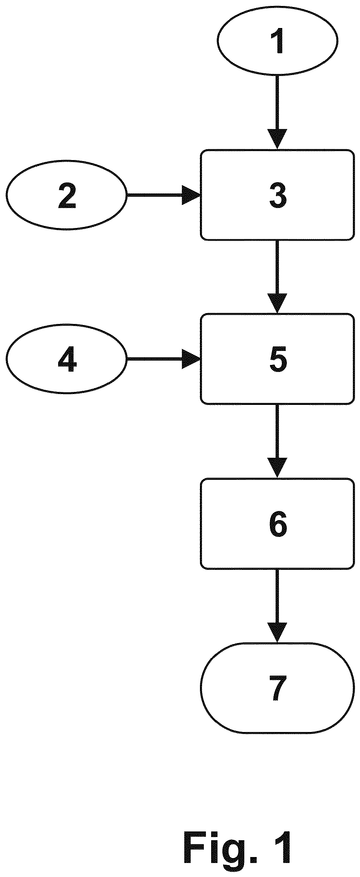

Fig. 1

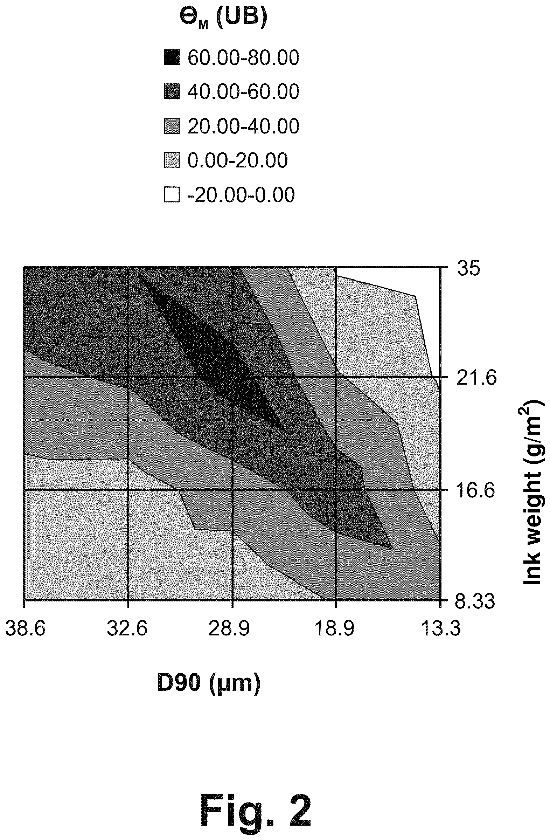

Fig. 2

Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2131466
- ES 2152100 T3
- ES 2238332 T3
- ES 2289916
- ES 2439941 T3
- US 20130265376 A
- ES 2396399